**Europäisches Patentamt**

**European Patent Office**

**Office européen des brevets**

(19)

(11) **EP 1 719 643 A1**

(12) **EUROPEAN PATENT APPLICATION**
published in accordance with Art. 158(3) EPC

(43) Date of publication:
**08.11.2006 Bulletin 2006/45**

(51) Int Cl.:
**B60G 17/015** (2006.01)    **B60G 21/055** (2006.01)

(21) Application number: **05719433.4**

(86) International application number:
**PCT/JP2005/002925**

(22) Date of filing: **23.02.2005**

(87) International publication number:
**WO 2005/082650 (09.09.2005 Gazette 2005/36)**

(84) Designated Contracting States:
**DE FR GB**

(30) Priority: **26.02.2004 JP 2004051295**

(71) Applicant: **AISIN SEIKI KABUSHIKI KAISHA**
**Kariya-shi, Aichi-ken 448-8650 (JP)**

(72) Inventor: **YASUI, Yoshiyuki,**
**c/o AISIN SEIKI KABUSHIKI KAISHA**
**Kariya-shi,**
**Aichi 4488650 (JP)**

(74) Representative: **TBK-Patent**
**Bavariaring 4-6**
**80336 München (DE)**

(54) **STABILIZER CONTROLLER**

(57)    A stabilizer is actively controlled even for an input from a road surface, ride comfort is ensured against a variation resulted from irregularity of road surface, while a vehicle is traveling straight, and a roll angle of a vehicle body is restrained surely, when the vehicle is turning. In a stabilizer control apparatus for controlling a torsional rigidity of a stabilizer disposed between a right wheel and a left wheel of the vehicle, to control a rolling motion of a vehicle body actively in response to a turning state of the vehicle, a relative displacement between the vehicle body and the right and left wheels is detected (M13), and according to at least one of a stabilizer free control (M15) and a roll damping control (M16), on the basis of at least one of a difference between right and left wheel strokes and a difference between right and left wheel stroke velocities, an externally applied force for controlling the torsional rigidity of the stabilizer is set (M17).

FIG. 3

**Description**

TECHNICAL FIELD

The present invention relates to a stabilizer control apparatus for a vehicle, and more particularly to an apparatus for controlling a torsional rigidity of a stabilizer disposed between a right wheel and a left wheel.

BACKGROUND ART

In general, a stabilizer control apparatus for a vehicle is adapted to apply an appropriate roll moment to the vehicle from outside thereof by means of a stabilizer, while the vehicle is traveling with a turning operation, to reduce or restrain a rolling motion of a vehicle body. For example, in Patent document 1, the following matters are disclosed. That is, in a rigidity control structure of a stabilizer, it is described that in order to reduce rolling phenomenon, a rigidity is increased to reduce the rolling of the vehicle body, and that preferably the rigidity is decreased in view of a ride comfort. Then, in concreting the rigidity control of the stabilizer such that if the rigidity of the stabilizer is necessary, the rigidity is effective, whereas if the rigidity is unnecessary, the rigidity of the stabilizer is reduced, there is proposed a most suitable rigidity control structure of the stabilizer such that the number of parts can be reduced, and reduction of production cost and improvement in generalization can be expected. In practice, in the rigidity control structure of the stabilizer provided with the stabilizer having its middle portion connected to a vehicle body, and its opposite ends connected to an axle, an actuator capable of reducing the rigidity of the stabilizer, and a switching valve for selecting operation or non-operation of the actuator, the switching valve is constituted to be switched by inertia force in a lateral direction of the vehicle body resulted from rolling phenomena of the vehicle body.

Also, in Patent document 2 as cited below, there is proposed a roll stabilizing apparatus for actively restraining a rolling of a vehicle. That is, at least a sensor for measuring a lateral rolling value (rolling), and at least a turning actuator provided between half portions of front and/or rear stabilizer are provided, and a pretension is applied to the half portion of the stabilizer to reduce or restrain the rolling motion, and a resisting moment is applied to a vehicle body, as a function of output signal of the sensor, when rolling.

In Patent document 3 as cited below, there is disclosed a method for determining a rough road, by calculating a wheel acceleration on the basis of a wheel speed, and obtaining its high-frequency component through a high-pass filter, to calculate a dispersion of the wheel acceleration, on the basis of which the rough road is determined. Also, in Patent document 4, there is disclosed a method for determining a rough road according to a result of F-study, which is executed through a dispersion of differentiated value of output from an acceleration sensor at a small steering angle on a reference flat road surface, and the dispersion of differentiated value output from the acceleration sensor at the small steering angle on the road surface where the vehicle is traveling at present. Furthermore, in Patent document 5, as to factors for use in a vehicle stability control, there are disclosed a spin value indicative of spinning state variable and a drift value indicative of drift-out state variable.

Patent document 1:

Japanese Patent Laid-open Publication No.8-268027

Patent document 2:

Japanese PCT Laid-open Publication No.2002-518245

Patent document 3:

Japanese Patent Laid-open Publication No.9-20223

Patent document 4:

Japanese Patent Laid-open Publication No.2001-63544

Patent document 5:

Japanese Patent Laid-open Publication No.9-193776

DISCLOSURE OF THE INVENTION

PROBLEMS TO BE SOLVED BY THE INVENTION

However, in the rigidity control structure of the stabilizer in the above-cited Patent document 1, a torsional rigidity of a stabilizer is set to be high for the input from inertia of a sprung (vehicle body), to restrain a roll angle of the vehicle body and stabilize a vehicle attitude. On the other hand, the torsional rigidity of the stabilizer is set to be low for the input from unsprung (wheel) to improve the ride comfort. And, as these events are opposite to each other, the apparatus as shown in the Patent document 1 has been proposed.

Therefore, in the stabilizer control apparatus capable of actively restraining the rolling motion of the vehicle body, a problem to be solved in the present invention is to control the stabilizer actively even for the input from the road surface, and improve the ride comfort.

Also, another problem to be solved in the present invention is to provide a stabilizer control apparatus, which is not only capable of controlling the torsional rigidity of the stabilizer, but also capable of controlling a roll damping, to improve the ride comfort.

MEANS FOR SOLVING THE PROBLEMS

To solve the above-described problems, according to the present invention, in a stabilizer control apparatus for controlling a torsional rigidity of a stabilizer disposed between a right wheel and a left wheel of a vehicle to control a rolling motion of a vehicle body actively in response to a turning state of said vehicle, it is provided with wheel stroke detection means for detecting a relative displacement between said vehicle body and said right and left wheels for at least one of a front axle and a rear axle of said vehicle, wheel stroke difference calculation means for calculating at least one of a difference between right and left wheel strokes and a difference between right and left wheel stroke velocities, on the basis of the result detected by said wheel stroke detecting means, and externally applied force setting means for setting an externally applied force for controlling the torsional rigidity of said stabilizer, on the basis of the result calculated by said wheel stroke difference calculation means, when said vehicle is traveling straight.

Said externally applied force can be set on the basis of a desired value for decreasing roll rigidity determined on the basis of said difference between right and left wheel strokes. Also, said externally applied force can be set on the basis of a desired value of roll damping force determined on the basis of said difference between right and left wheel stroke velocities. Or, said externally applied force may be set on the basis of the desired value for decreasing roll rigidity determined on the basis of said difference between right and left wheel strokes, and the desired value of roll damping force determined on the basis of said difference between right and left wheel stroke velocities.

Furthermore, said externally applied force can be set on the basis of the desired value for decreasing roll rigidity determined on the basis of said difference between right and left wheel strokes, the desired value of roll damping force determined on the basis of said difference between right and left wheel stroke velocities, the desired value of roll damping force determined on the basis of said difference between right and left wheel stroke velocities, and a desired value of an active roll moment of a vehicle. For example, said externally applied force can be determined, according to the following equation.

$$Rt = Rm - K5 \cdot Rr(St) + K6 \cdot Rd(dSt)$$

wherein,

Rt: externally applied force

Rm: desired value of active roll moment of a vehicle

Rr(St): desired value for decreasing roll rigidity determined on the basis of a difference between right and left wheel strokes

Rd(dSt): desired value of roll damping force determined on the basis of a difference between right and left wheel stroke velocities

K5, K6: control gains

St: difference between right and left wheel strokes

dSt: difference between right and left wheel stroke velocities

Also, according to the present invention, in the stabilizer control apparatus for controlling a torsional rigidity of a stabilizer disposed between a right wheel and a left wheel of a vehicle, to control a rolling motion of a vehicle body actively in response to a turning state of said vehicle, it may be provided with wheel stroke detection means for detecting a relative displacement between said vehicle body and said right and left wheels for at least one of a front axle and a rear axle of said wheel, wheel stroke lateral difference calculation means for calculating a difference between right and left wheel strokes on the basis of the result detected by said wheel stroke detection means, externally applied force setting means for setting an externally applied force for controlling the torsional rigidity of said stabilizer, on the basis of the result calculated by said wheel stroke lateral difference calculation means, and turning factor setting means for setting a turning factor indicative of a turning state of said vehicle, and it may be constituted such that the torsional rigidity of said stabilizer is decreased to be lower than a value inherently provided for said stabilizer bar, according to the externally applied force set by said externally applied force setting means, in response to the turning factor set by said turning factor setting means.

EFFECTS OF THE INVENTION

Consequently, in the stabilizer control apparatus according to the present invention, it can restrain the roll angle of the vehicle body surely when the vehicle is turning, and it can actively control the stabilizer, by the externally applied force set by the externally applied force setting means, even for an input from road surface when the vehicle is traveling straight, including a control for a roll damping, to ensure an appropriate ride comfort. As for the externally applied force setting means, there are various embodiments as described above.

Also, according to the stabilizer control apparatus provided with said turning factor setting means, the stabilizer can be actively controlled to decrease the torsional rigidity of the stabilizer in response to the input from the wheels, when the vehicle is traveling straight, thereby to ensure an appropriate ride comfort.

BRIEF DESCRIPTION OF THE DRAWINGS

[FIG.1] is a schematic structural figure of a vehicle having a stabilizer control apparatus according to an embodiment of the present invention.

[FiG.2] is a structural figure showing an example of a stabilizer control unit according to an embodiment of the present invention.

[FIG.3] is a block diagram showing a control structure according to an embodiment of the present invention.

[FIG.4] is a control block diagram of an embodiment of the active roll restraining control as shown in FIG.3.

[FIG.5] is a block diagram showing an example of embodiment for providing control gains relative to a calculated lateral acceleration, and control gains relative to an actual lateral acceleration, on the basis of a turning factor, according to an embodiment of the present invention.

[FIG.6] is a graph showing an example of a map for providing a control gain relative to a calculated lateral acceleration, and a control gain relative to an actual lateral acceleration, on the basis of a turning factor, according to an embodiment of the present invention.

[FIG.7] is a graph showing an example of a map for providing a control gain relative to a variation of calculated lateral acceleration, and a control gain relative to a variation of actual lateral acceleration, on the basis of a turning factor, according to an embodiment of the present invention.

[FIG.8] is a graph showing an example of a map for setting a non-linear control gain characteristic to a control gain relative to a calculated lateral acceleration, and a control gain relative to an actual lateral acceleration, according to an embodiment of the present invention.

[FIG.9] is a graph showing an example of a map for setting a non-linear control gain characteristic to a control gain relative to a variation of calculated lateral acceleration, and a control gain relative to a variation of actual lateral acceleration, according to an embodiment of the present invention.

[FIG.10] is a block diagram of an example of embodiment for providing control gains relative to a calculated lateral acceleration, and control gains relative to an actual lateral acceleration, on the basis of a road condition or the like, according to an embodiment of the present invention.

[FIG.11] is a graph showing an example of a map for providing control gains relative to a calculated lateral acceleration, and control gains relative to an actual lateral acceleration, on the basis of a result of determination of a rough road, according to an embodiment of the present invention.

[FIG.12] is a graph showing an example of a map for providing control gains relative to a variation of calculated lateral acceleration, and control gains relative to a variation of actual lateral acceleration, on the basis of a result of determination of a rough road, according to an embodiment of the present invention.

[FIG.13] is a graph showing an example of a map for determining an upper limit of calculated lateral acceleration, on the basis of a road surface coefficient of friction, according to an embodiment of the present invention.

[FIG.14] is a graph showing an example of a map for providing a control gain for a calculated lateral acceleration, and a control gain for an actual lateral acceleration, on the basis of a road surface coefficient of friction, according to an embodiment of the present invention.

[FIG.15] is a graph showing an example of a map for providing a control gain for a variation of calculated lateral acceleration, and a control gain for a variation of actual lateral acceleration, on the basis of a road surface coefficient of friction, according to an embodiment of the present invention.

[FIG.16] is a graph showing an example of a map for providing a control gain for a calculated lateral acceleration, and a control gain for an actual lateral acceleration, on the basis of a spinning state variable or drift-out state variable, according to an embodiment of the present invention.

[FIG.17] is a graph showing an example of a map for providing a control gain for a variation of calculated lateral acceleration, and a control gain for a variation of actual lateral acceleration, on the basis of a spinning state variable or drift-out state variable, according to an embodiment of the present invention.

[FIG.18] is a graph showing an example of a map for providing an initial value of a front roll rigidity ratio according to an embodiment of the present invention.

[FIG.19] is a block diagram showing an example of a stabilizer free control block according to an embodiment of the present invention.

[FIG.20] is a block diagram showing an example of a roll damping control block according to an embodiment of the present invention.

[FIG.21] is a block diagram showing an example of a block for calculating a desired value of stabilizer applied force according to an embodiment of the present invention.

[FIG.22] is a graph showing an example of a map for providing a contributory degree of a stabilizer free control to the overall control according to an embodiment of the present invention.

[FIG.23] is a graph showing an example of a map providing a contributory degree of a roll damping control to the overall control according to an embodiment of the present invention.

[FIG.24] is a control block diagram of an embodiment of an motor control according to an embodiment of the present invention.

DESCRIPTION OF CHARACTERS

SBf: front stabilizer,
SBfr, SBfl: front stabilizer bar,
SBr: rear stabilizer,
FT, RT: stabilizer actuator,
SW: steering wheel,
SA: steering angle sensor,
WHfr, WHfl, WHrr, WHrl: vehicle wheel,
WSfr, WSfl, WSrr, WSrl: wheel speed sensor,
HSfr, HSfl, HSrr, HSrl: stroke sensor,
YR: yaw rate sensor,
XG: longitudinal acceleration sensor,
YG: lateral acceleration sensor,
ECU: electronic controller

BEST MODE FOR CARRYING OUT THE INVENTION

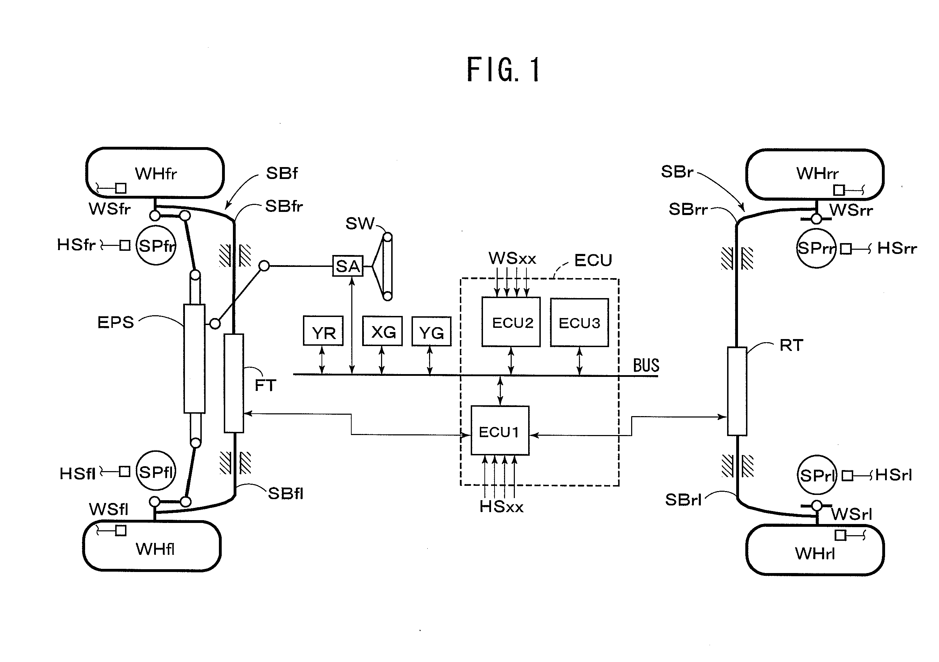

Hereinafter, will be explained a desirable embodiment of the present invention. In FIG.1, there is shown overall structure of a vehicle with a stabilizer control apparatus according to an embodiment of the present invention. A stabilizer SBf for front wheels and a stabilizer SBr for rear wheels are disposed to act as a torsional spring when a motion in a rolling direction is applied to a vehicle body (not shown). As for the front stabilizer SBf and rear stabilizer SBr, each torsional rigidity of them is adapted to be controlled by stabilizer actuators FT and RT to be varied, so as to restrain a roll angle of the vehicle body resulted from the rolling motion of the vehicle body. The stabilizer actuators FT and RT are controlled by a stabilizer control unit ECU1 provided in an electronic controller ECU.

As shown in FIG.1, at each wheel WHxx of the vehicle, there is provided a wheel speed sensor WSxx ("xx" designates each wheel, i.e., "fr" designates the wheel at the front right side, "fl" designates the wheel at the front left side, "rr" designates the wheel at the rear right side, and "rl" designates the wheel at the rear left side), which is connected to the electronic controller ECU, and by which a signal having pulses proportional to a rotational speed of each wheel, i.e., a wheel speed, is fed to the electronic controller ECU. Also, near a suspension spring SPxx of each wheel, there is provided a suspension stroke sensor HSxx (may be called as a height sensor, hereinafter, simply called as a stroke sensor), and it is so constituted that a relative displacement between the vehicle and the wheel at each wheel is input to the electronic controller ECU. Furthermore, a steering angle sensor SA for detecting a steering angle (handle angle) $\delta f$ of a steering wheel SW, a longitudinal acceleration sensor XG for detecting a longitudinal acceleration Gx of the vehicle, a lateral acceleration sensor YG for detecting an actual lateral acceleration Gya of the vehicle, a yaw rate sensor YR for detecting a yaw rate Yr of the vehicle and the like are electrically connected to the electronic controller ECU.

In the electronic controller ECU, in addition to the stabilizer control unit ECU1 as described above, a brake control unit ECU2, steering control unit ECU3 and the like are constituted, and these control units ECU1-3 are connected to a communication bus, through a communication unit (not shown) provided with CPU, ROM and RAM for communication. Therefore, the information required for each control system can be fed from other control systems.

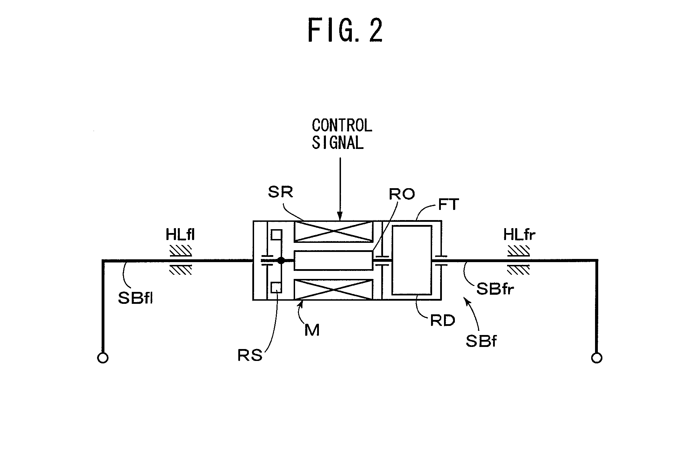

FIG.2 shows a practically constituted example of the stabilizer actuator FT (RT is constituted in the same manner), wherein the front stabilizer SBf is divided into a pair of right and left stabilizer bars SBfr and SBfl, one end of each bar is connected to a right or left wheel, and the other end of one bar is connected to a rotor RO of an electric motor M through a speed reducing mechanism RD, and the other end of the other one bar is connected to a stator SR of the electric motor M. The stabilizer bars SBfr and SBfl are held on the vehicle body by holding members HLfr and HLfl.

Consequently, when the electric motor M is energized, torsional force is created on each of the divided stabilizer bars SBfr and SBfl, so that apparent torsional spring characteristic of the front stabilizer SBf is changed, whereby the roll rigidity of the vehicle body is controlled. A rotational angle sensor RS is disposed in the stabilizer actuator FT, to act as rotational angle detection means for detecting a rotational angle of the electric motor M. As a power source of the stabilizer actuator, instead of the electric motor M, a pump (not shown) driven by a motor or an engine may be provided, and it may be so constituted that hydraulic pressure control is performed by this pump.

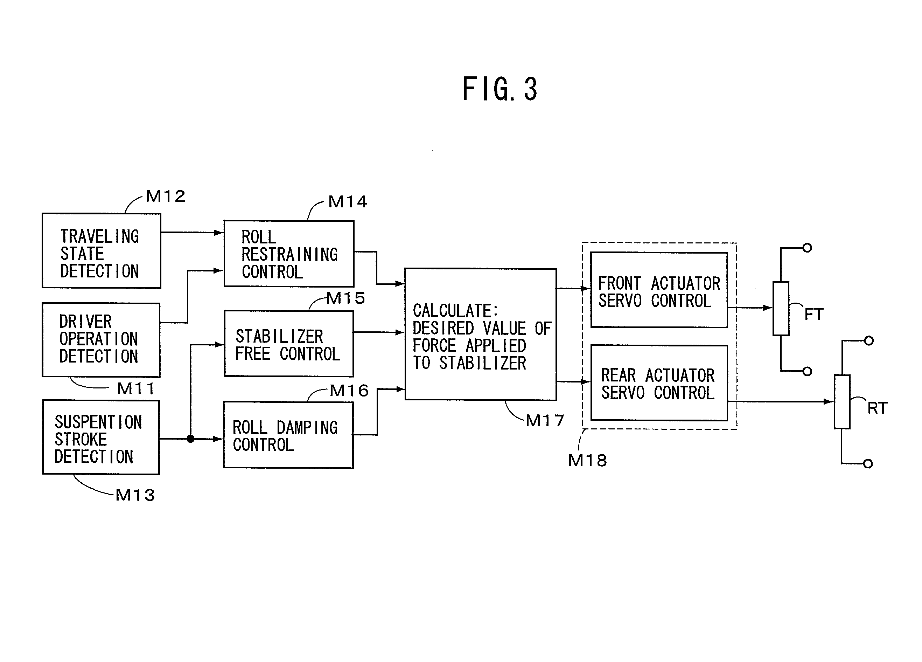

FIG.3 shows a control structure according to the present embodiment, wherein as for the steering operation (handling operation) of the driver, the information including the steering angle (handle angle) δf is detected by vehicle driver operation detection means M11, and wherein vehicle motion variable including the vehicle speed, lateral acceleration and yaw rate is detected by vehicle traveling state detection means M12. On the basis of the detected result, at a roll restraining control block M14, a roll restraining control is performed to restrain the roll angle of the vehicle body when the vehicle is turning. On the other hand, a stroke of the suspension spring SPxx is detected by suspension stroke detection means M13. There are provided a stabilizer free control block M15 for decreasing torsional rigidity of the stabilizers SBf and SBr on the basis of the detected stroke to improve ride comfort on a rough road, and a roll damping control block M16 for controlling a damping force in a rolling direction of the vehicle, on the basis of the results detected by the suspension stroke detection means M13.

The aforementioned roll restraining control is to stabilize a vehicle attitude when the vehicle is turning, whereas the stabilizer free control and roll damping control are to improve the ride comfort when the vehicle is traveling straight. That is, the contradictory problems such as stabilizing the vehicle attitude when the vehicle is turning and improvement of the ride comfort when it is traveling straight, are to be solved together. Therefore, it can be so constituted that either one of the stabilizer free control block M15 for improving the ride comfort and the roll damping control block M16 is omitted. At each of the control blocks M14, M15 and M16, force applied to each of the stabilizer actuators FT and RT disposed on the front and rear wheels is calculated. Then, at the following desired value of stabilizer applied force calculation block M17, a desired value of control force applied to each of the stabilizer actuators FT and RT is set, taking the vehicle traveling state into consideration. On the basis of the desired value, it is so constituted that the actuator servo control is executed, so that the stabilizer actuators FT and RT are driven to be controlled.

Details of calculation at the desired value of stabilizer applied force calculation block M17 will be described later. With respect to the force applied to the stabilizer actuators FT and RT, when a degree of the vehicle turning state is small, i.e., when the vehicle is traveling approximately straight, for example, a desired value of control fed from the roll restraining control (M14), which is controlled in response to the vehicle turning state, is set to be small, and the desired value of control fed from the stabilizer free control (M15) and roll damping control (M16) are set to be large. According to the stabilizer free control (M15), in order to improve the ride comfort, the force applied to the stabilizer actuators FT and RT is set such that the torsional rigidity will be decreased furthermore, comparing with the torsional rigidity that is inherently provided on the stabilizer (the torsional rigidity provided in such a state that the divided stabilizer bars are fixed). The applied force acts to decrease the roll moment transmitted to the vehicle body due to the irregularity of road surface, thereby to reduce the torsional rigidity of the stabilizer. Therefore, the force is applied in a direction opposite to the direction of the force provided in the case where the roll restraining control is performed when the vehicle is turning.

Furthermore, in order to create the damping force to the rolling motion of the vehicle body, the desired value of control is set on the basis of the roll damping control at the roll damping control block M16. When the vehicle is in its turning state, the desired values of control for the stabilizer free control and roll damping control are decreased, and the desired value of control for the roll restraining control is increased. Therefore, it is possible to restrain the rolling motion surely when the vehicle is turning.

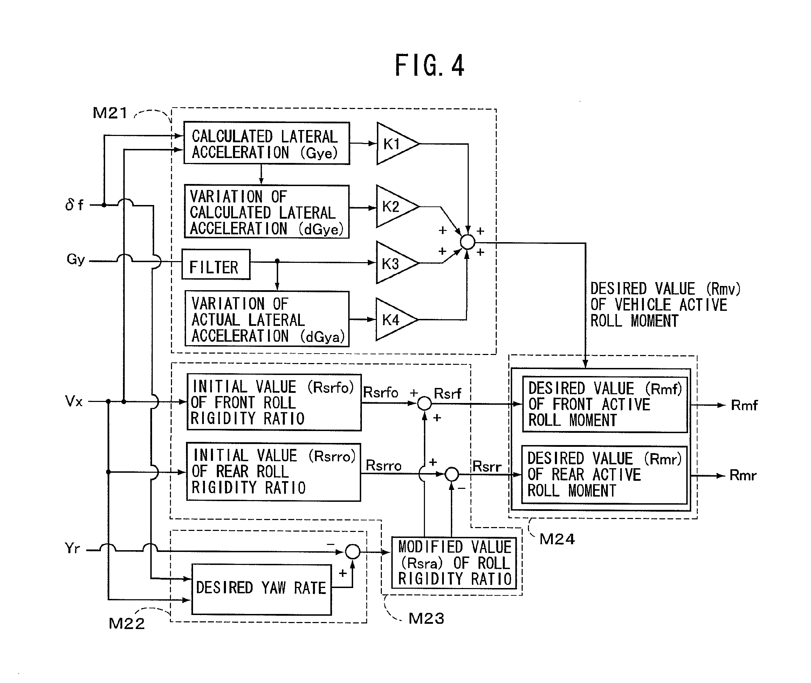

FIG.4 shows a practical embodiment of the roll restraining control block M14 as shown in FIG.3, wherein a desired value of the vehicle active roll moment Rmv required for restraining the rolling motion of the vehicle as a whole is calculated at a desired value of vehicle active roll moment calculation block M21, on the basis of the actual lateral acceleration Gya detected by the lateral acceleration sensor YG, the variation of the actual lateral acceleration dGya obtained by differentiating the actual lateral acceleration Gya, the calculated lateral acceleration Gye calculated by the steering angle δf and vehicle speed Vx, and the variation of the calculated lateral acceleration dGye obtained by differentiating the calculated lateral acceleration Gye. The calculated lateral acceleration Gye can be obtained by the following equation (1).

$$Gye = (Vx^2 \cdot \delta f) / \{L \cdot N \cdot (1+Kh \cdot Vx^2)\} \qquad --- (1)$$

where "L" is a wheel base, "N" is a steering gear ratio, and "Kh" is a stability factor.

Consequently, the desired value (Rmv) of active roll moment to be applied to the vehicle as a whole to achieve an appropriate rolling characteristic can be obtained by the following equation (2):

$$Rmv = K1 \cdot Gye + K2 \cdot dGye + K3 \cdot Gya + K4 \cdot dGya --- (2)$$

where K1, K2, K3, K4 are control gains, and will be set as described later, in view of circumstances as follows.

At the outset, comparing the actual lateral acceleration Gya detected by the lateral acceleration sensor with the calculated lateral acceleration Gye calculated on the basis of the steering angle δf and the vehicle speed Vx, the actual lateral acceleration Gya is influenced by the irregularity of road surface, and it becomes to provide a delayed signal, because it is obtained as a result of steering operation. However, the actual lateral acceleration Gya is of a value for surely reflecting the road surface condition (coefficient of friction of the road surface). On the contrary, the calculated lateral acceleration Gye is not influenced by the irregularity of road surface, and obtained by the steering inputs (steering angle δf and vehicle speed Vx), so that it will become to provide a signal with small delay. However, it is not of a value for reflecting the road surface condition (coefficient of friction), so that its accuracy will be lowered in a turning state beyond a frictional limit, for example.

According to the present embodiment, therefore, the control gains K1, K2, K3, K4 in the above-described equation (2) are modified in response to the vehicle traveling state or the like as described later, so that the problems relative to the actual lateral acceleration Gya and the calculated lateral acceleration Gye are supplemented with each other. For example, in the case where the vehicle is traveling straight or traveling with a small turning operation, it is so constituted that only the calculated lateral acceleration Gye is used, or that the calculated lateral acceleration Gye is largely contributed to the stabilizer control, thereby to achieve the active roll restraining control. Consequently, the lateral acceleration caused by the vehicle turning operation and lateral acceleration caused by the irregularity of road surface can be clearly distinguished, to improve the ride comfort, and surely restrain the rolling motion in the turning operation. The control gains K1, K2, K3, K4 in the above-described equation (2) will be explained in sequence hereinafter.

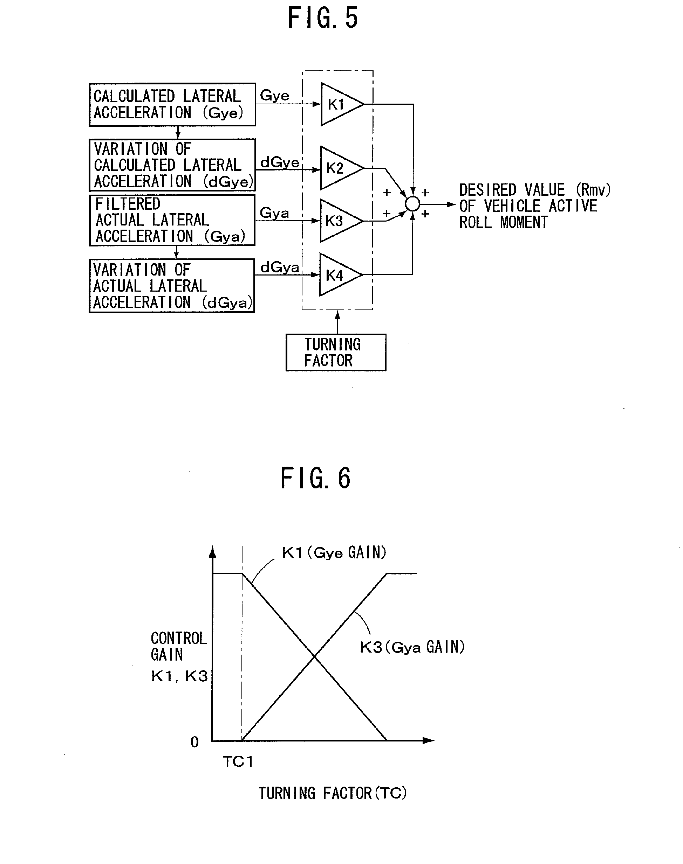

FIG.5 shows an embodiment for providing the control gains K1 and K2 relative to the calculated lateral acceleration Gye, and the control gains K3 and K4 relative to the actual lateral acceleration Gya, on the basis of a turning factor TC, which is a factor indicative of a level of turning operation, as indicated by large or small. In order to compensate the influence caused by the irregularity of road surface, it is required to provide the turning factor TC to be the one hardly influenced by the irregularity of road surface, so that it is desirable to select one of the calculated lateral acceleration Gye, steering angle δf and yaw rate Yr, or two or more of them combined. As the lateral acceleration caused by the irregularity of road surface is approximately 0.1G at most ("G" is a gravitational acceleration), the actual lateral acceleration Gya may be used for the turning factor TC, while it is influenced by the irregularity of road surface.

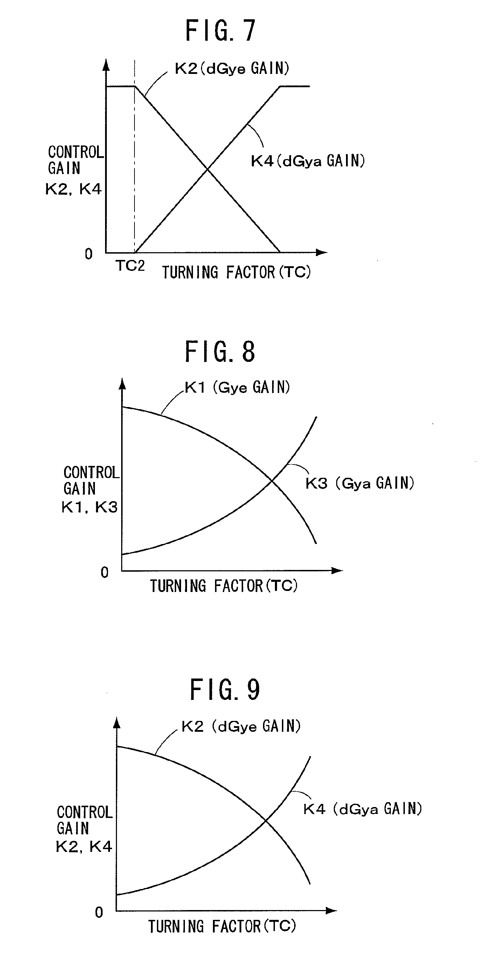

For example, as for a map for providing the control gain K1 relative to the calculated lateral acceleration Gye and the control gain K3 relative to the actual lateral acceleration Gya, it may be provided on the basis of the turning factor TC, as shown in FIG.6. Particularly, in the case where the turning factor TC is small (TC ≦ TC1), the control gain K3 for the actual lateral acceleration Gya is set to be zero, so that the control may be performed in response to the calculated lateral acceleration Gye, which is calculated on the basis of the steering angle δf. Also, a map for providing the control gain K2 relative to the variation of calculated lateral acceleration dGye and the control gain K4 relative to the variation of actual lateral acceleration dGya, may be provided on the basis of the turning factor TC, respectively, as shown in FIG.7. In the case where the turning factor TC is small (TC ≦ TC2), the control gain K4 relative to the variation of actual lateral acceleration dGya is set to be zero, so that the control may be performed in response to the variation of calculated lateral acceleration dGye, which is obtained on the basis of the steering angle δf. Thus, in the case where the turning factor TC is small, it is preferable to increase the control gain for the variation of calculated lateral acceleration dGye, which is hardly influenced by the irregularity of road surface, so that the influence caused by the irregularity of road surface can be restrained, to improve the ride comfort.

According to the maps as shown in FIGS.6 and 7, the stabilizer control is performed in response to only the calculated lateral acceleration Gye, or only the variation of calculated lateral acceleration dGye. However, the present invention is not limited to them, and may be used a calculated lateral acceleration information (including at least one of Gye and dGye) that is hardly influenced by the irregularity of road surface, for example, it may be set as follows. That is, in the case where the turning level is small, the influence amount caused by the calculated lateral acceleration information may be set to be large, whereby the ride comfort can be improved. In this case, the influence amount caused by the calculated lateral acceleration does not necessarily have to be set as 100%, there may be remained the influence amount caused by the actual lateral acceleration information (including at least one of Gya and dGya). Or, as shown in the maps of FIGS.8 and 9, may be provided a non-linear characteristic of control gain for the calculated lateral acceleration information, or may be provided a characteristic with a polygonal line which is approximate to the non-linear characteristic. With the turning operation of the vehicle being increased, the influence amount caused by the calculated lateral acceleration information is decreased, whereas the influence amount caused by the actual lateral acceleration information is increased, whereby the influence caused by the irregularity of road surface can be restrained, when the vehicle is traveling straight, and the roll angle of the vehicle body can be restrained surely, when the vehicle is turning.

Furthermore, with the control gain being provided on the basis of the turning factor TC, compensation for a variation of the coefficient of friction of the road surface will be made effectively, as described later. In order to obtain the calculated lateral acceleration Gye reflecting the coefficient of friction, it is required to obtain the information about a road coefficient of friction μmax. However, as the coefficient of friction is the one to be estimated, there could be a case where it is determined that the road is of relatively high coefficient of friction, while it is in fact the road of relatively low coefficient of friction. This might result in applying excessive amount of active roll control to the stabilizer, to cause a reverse rolling motion, which might give a vehicle driver a different feeling from the one he expected. In this case, it is preferable to set the influence amount caused by the actual lateral acceleration Gya to be increased, and set the influence amount caused by the calculated lateral acceleration Gye to be decreased, with the turning operation of the vehicle indicated by the turning factor (TC) being increased, whereby the problem of reverse rolling motion can be solved.

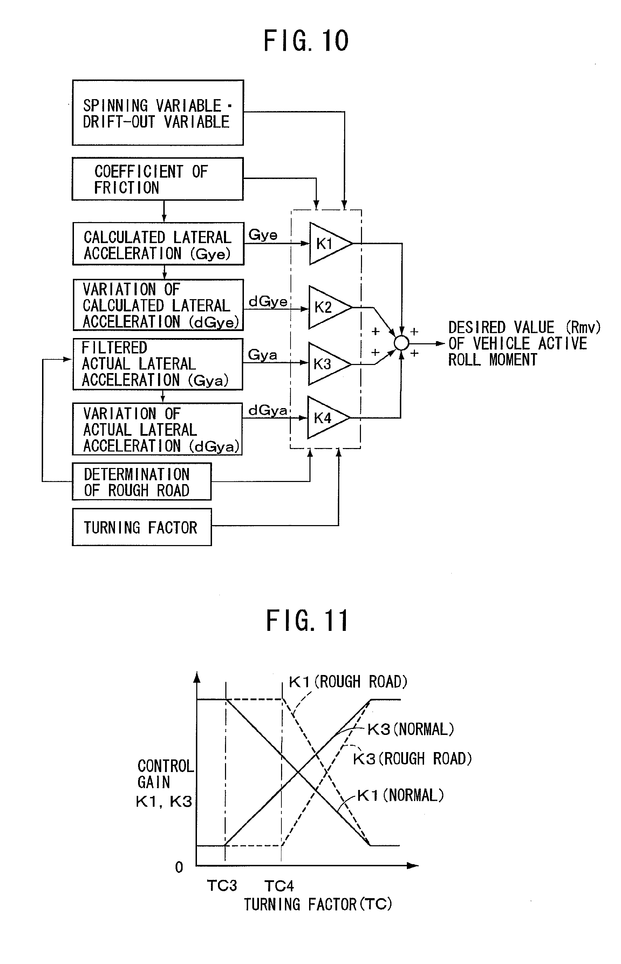

In addition to the turning factor as described above, it is possible to set the control gains on the basis of the result of determination of rough road, coefficient of friction, spinning state variable (spin value) and drift-out state variable (drift value) indicative of turning state of the vehicle, or the like, as shown in FIG.10 as an embodiment. With respect to the means for determining the rough road, may be used means for determining it based on wheel speeds, as disclosed in the Patent document 3, or may be used means for determining it on the basis of a result detected by an acceleration sensor, as disclosed in the Patent document 4. In general, these results are used for an anti-skid control (ABS), so that they are processed at the brake control unit ECU2. The spinning state variable (spin value) and drift-out state variable (drift value) are required for performing a vehicle stability control, so that these are processed at the brake control unit ECU2, according to a process as disclosed in the Patent document 5 as cited before, for example. And, the coefficient of friction may be calculated at the brake control unit ECU2 or the steering control unit ECU3, according to various known methods. Then, the determined result and the state variable are input to the stabilizer control unit ECU1 through a communication bus.

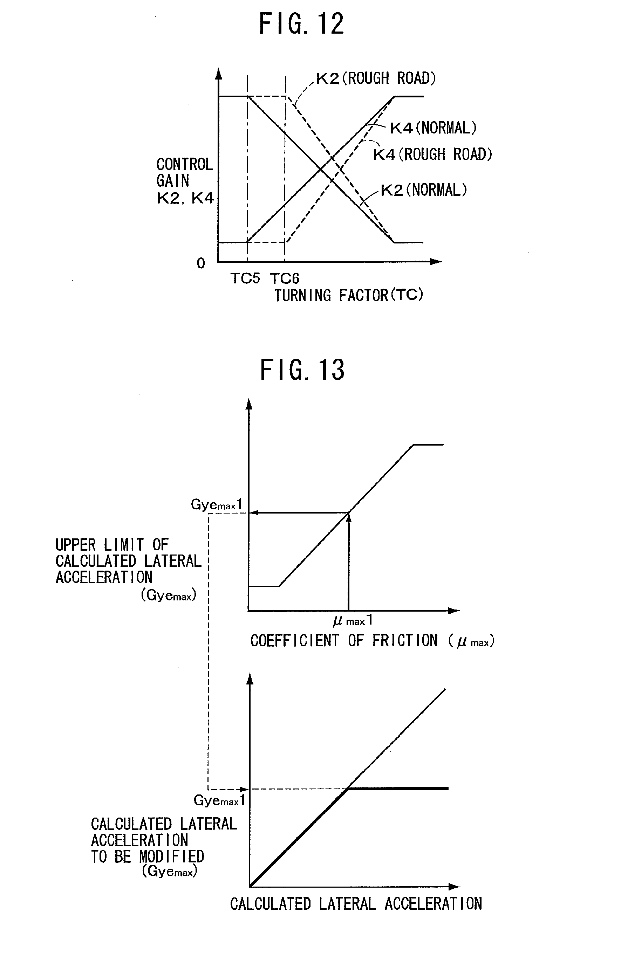

FIGS.11 and 12 show an example of a map provided on the basis of the result of determination of rough road, as described above. In the case where it is determined that the road surface is rough, rates contributed by the control gains K1 and K2 relative to the calculated lateral acceleration Gye are changed to be larger than the rates contributed by those in such a normal state that the road is not determined to be rough. And, in the case where the road surface is determined to be rough, the rates contributed by the control gains K3 and K4 relative to the actual lateral acceleration Gya are changed to be smaller than the rates contributed by those in the normal state. With the control gains being changed, if it is determined that the vehicle is traveling on a rough road with a large irregularity of road surface, the rates contributed by the control gains K1 and K2 relative to the calculated lateral acceleration Gye are increased, whereas the rates contributed by the control gains K3 and K4 relative to the actual lateral acceleration Gya are decreased, thereby to prevent the ride comfort from being deteriorated. Furthermore, if it is determined that the road is rough, parameters to the filter for the actual lateral acceleration Gya as shown in FIG.4 are changed to reduce a noise to the actual lateral acceleration Gya. Although signals to be transmitted will be delayed contrary to reduction of the noise, if it is determined that the road is rough, the rates contributed by the control gains K1 and K2 relative to the calculated lateral acceleration Gye are increased, so that the delay of the signal will be compensated.

Next, in order to obtain the calculated lateral acceleration Gye accurately in response to the coefficient of friction of the road surface, the coefficient of friction (μmax) calculated at the brake control unit ECU2 or steering control unit ECU3 is input to the stabilizer control unit ECU1 through the communication bus. The calculated lateral acceleration Gye is modified according to the coefficient of friction (μmax), as shown in FIG.13. As the coefficient of friction μmax is provided for setting a maximal lateral acceleration which could be created on that road surface, an upper limit (Gyemax) of the calculated lateral acceleration Gye is determined on the basis of the coefficient of friction μmax. For example, in the case where the coefficient of friction μmax is μmax1 (e.g., 0.4) as shown in the upper section of FIG.13, and the upper limit Gyemax of the calculated lateral acceleration is set to be Gyemax1 (=0.4G), even if the calculated lateral acceleration Gye is calculated as 0.6G according to the above-described equation (1), it will be output as Gyemax1 (=0.4G) as shown in the lower section of FIG.13. As a result, accuracy of the calculated lateral acceleration can be improved to be responsive to the actual condition of the road surface.

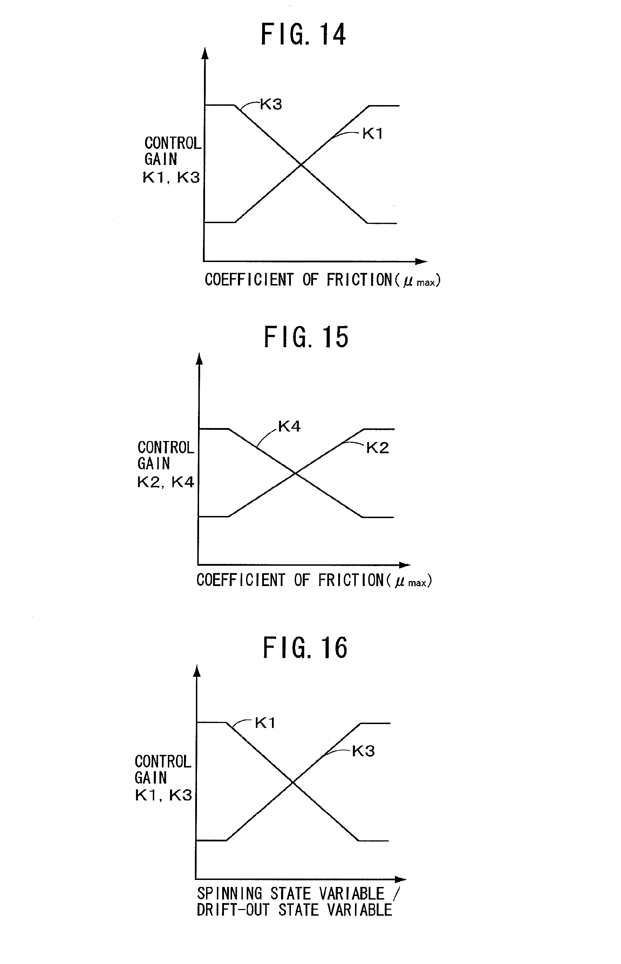

Alternatively, the compensation for the coefficient of friction can be made by modifying the control gains. For example, as shown in FIGS.14 and 15, in the case where it is determined that the coefficient of friction ($\mu$ max) is relatively low, the rate contributed by the calculated lateral acceleration Gye may be decreased, and the rate contributed by the actual lateral acceleration Gya may be increased. FIGS.14 and 15 show a map for providing control gains on the basis of the coefficient of friction, wherein if the coefficient of friction ($\mu$max) is low, the rates contributed by the control gains K1 and K2 relative to the calculated lateral acceleration Gye are set to be low, whereas the rate contributed by the control gains K3 and K4 relative to the actual lateral acceleration Gya are set to be relatively high. And, if the coefficient of friction ($\mu$ max) is high, the rates contributed by the control gains K1 and K2 may be set to be relatively high, whereas the rates contributed by the control gains K3 and K4 may be decreased.

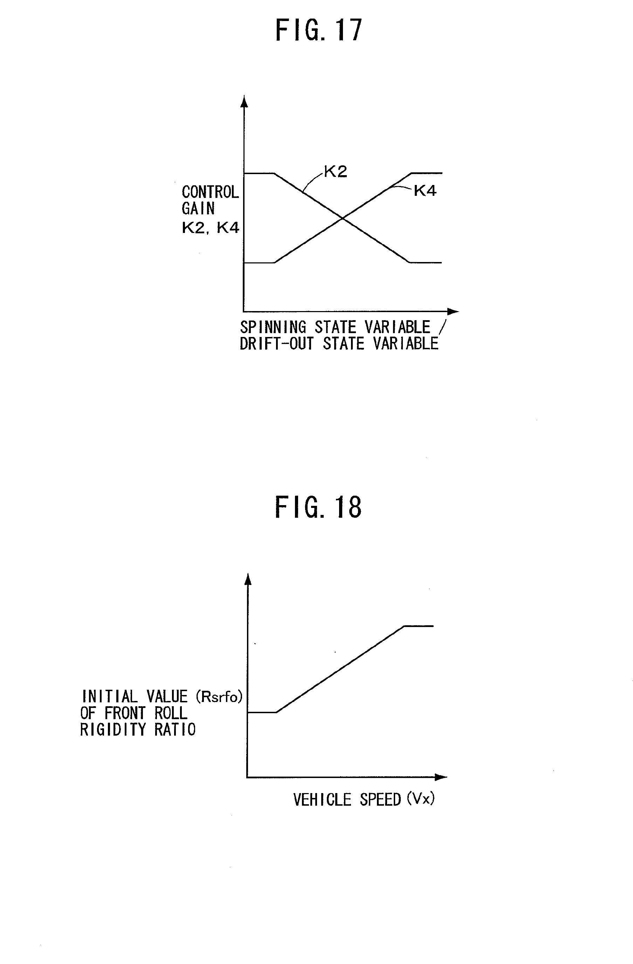

Furthermore, the influence caused by the coefficient of friction can be compensated by the state variable obtained in the vehicle stability control. FIGS.16 and 17 show a map for providing control gains on the basis of the spinning state variable (spinning value) and drift-out state variable (drift value). As shown in FIGS.16 and 17, in the case where output of the spinning value SV or drift value DV is large for example, the rates contributed by the control gains K3 and K4 relative to the actual lateral acceleration Gya may be increased, whereas the rates contributed by the control gains K1 and K2 relative to the calculated lateral acceleration Gye may be decreased.

Referring back to aforementioned FIG.4, the desired value of the front and rear roll rigidity ratio is calculated at the desired value of front and rear wheels roll rigidity ratio determination block M23, as follows. At the outset, the initial values Rsrfo and Rsrro are set for the front roll rigidity ratio and rear roll rigidity ratio, respectively, on the basis of the vehicle speed Vx. As shown in FIG.18, the initial value Rsrfo for the front roll rigidity ratio is set to be relatively low when the vehicle speed Vx is low, whereas it is set to be high when the vehicle speed Vx is high, to force the vehicle to be likely in the understeer condition when the vehicle is traveling at high speed. Then, the initial value Rsrro for the rear roll rigidity ratio is set to be (1-Rsrfo). Next, a desired yaw rate Yre is calculated on the basis of the steering angle $\delta$ f and vehicle speed Vx at the vehicle behavior determination block M22, to determine the vehicle steering performance, and then compared with the actual yaw rate Yr to obtain a yaw rate deviation $\Delta$Yr, on the basis of which a modified value Rsra for the roll rigidity ratio is calculated.

As a result, when the vehicle is likely to be in the understeer condition, the front roll rigidity ratio is modified to be decreased, and the rear roll rigidity ratio is modified to be increased. On the contrary, when the vehicle is likely to be in the oversteer condition, the front roll rigidity ratio is modified to be increased, and the rear roll rigidity ratio is modified to be decreased. Then, the desired value Rmf of active roll moment for the front wheel and the desired value Rmr of active roll moment for the rear wheel are calculated at the desired value of front and rear wheels active roll moment determination block M24, on the basis of the desired value Rmv of vehicle active roll moment, the desired value Rsrf of the front roll rigidity ratio, and the desired value Rsrr of the rear roll rigidity ratio, in accordance with the equations of Rmf = Rmv·Rsrf and Rmr = Rmv·Rsrr, respectively.

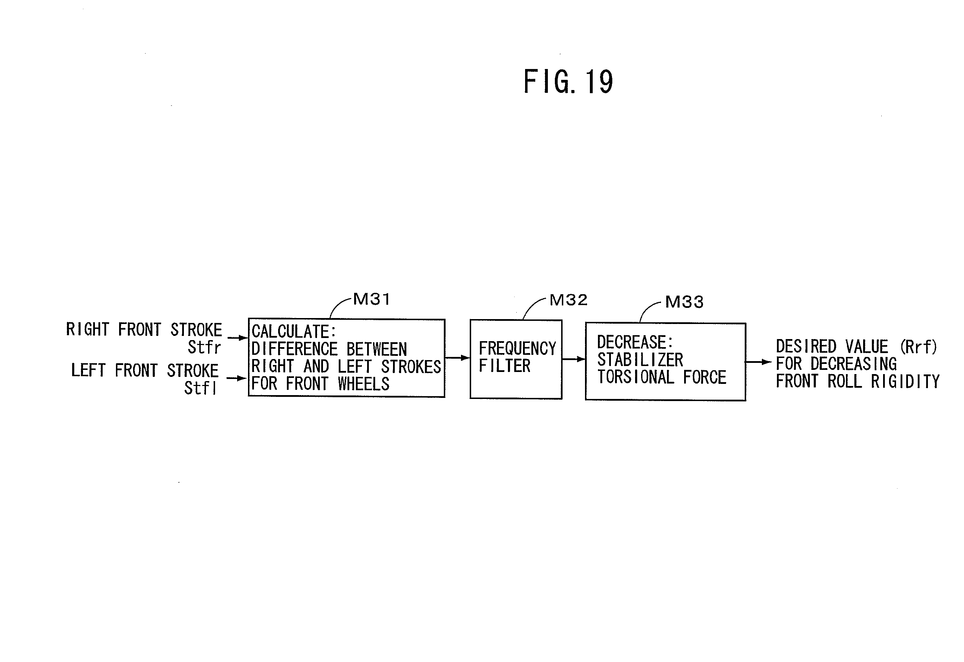

Next, referring to FIG.19, will be explained a practical embodiment of the aforementioned stabilizer free control block M15 as shown in FIG.3. Herein, a control block diagram for the front wheels is shown, while the control block for the rear wheels is the same as the former. According to the stroke sensor HSxx disposed on each wheel, the wheel stroke Stxx which corresponds to a relative displacement between the vehicle and the wheel at each wheel is obtained. Based on these wheel stroke information, differences Stf and Str between the right and left strokes for the front wheels and rear wheels are obtained by Stf = Stfr - Stfl, and Str = Strr - Strl (M31), respectively. According to the stabilizer free control, the effect is remarkable with the road input being 1-3 Hz. Therefore, the differences Stf and Str between the right and left strokes are filtered in the frequency filter M32.

Furthermore, in order to improve the ride comfort, the desired value of control is calculated (M33) in response to the differences Stf and Str between the right and left strokes, such that the torsional force of stabilizer is decreased or made to be zero. Consequently, the desired values for decreasing front and rear roll rigidity Rrf and Rrr are calculated, according to Rrf = Sgf·K7·Sbsf·Stf, and Rrr = Sgr·K8·Sbsr·Str, respectively. Herein, Sgf and Sgr are coefficients for converting the torsional force into a moment (roll moment) around the roll axis, and are provided by the arm length of the stabilizer bar, the mounting position, and the like. Also, Sbsf and Sbsr are inherent torsional rigidities of the front and rear stabilizer bars, and K7 and K8 are coefficients for providing a decreased amount of the torsional force. Further, in such a case that the torsional rigidity of stabilizer bar is nonlinear, the desired values Rrf and Rrr can be determined on the basis of a map of the difference between right and left wheel strokes and the roll rigidity decreased amount, which is experimentally obtained in advance.

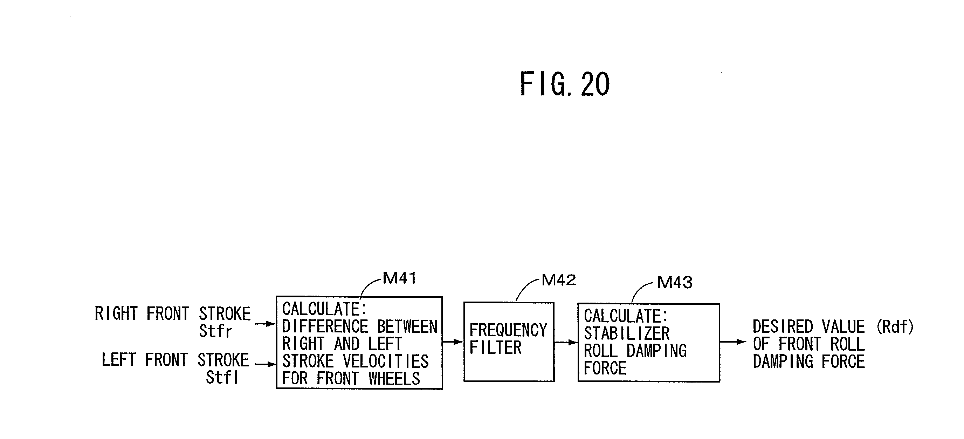

Also, as for an embodiment of the roll damping control block M16 as shown in FIG.3, the control block for the front wheels is shown in FIG.20 (as the control for the rear wheels is the same, it is omitted herein). Based on the wheel stroke Stxx which corresponds to the relative displacement between the vehicle body and the wheel at each wheel position, and which is detected by the stroke sensor HSxx disposed on each wheel, the differences Stf and Str between the right and left strokes for the front wheels and rear wheels are obtained, according to Stf = Stfr-Stfl, and Str = Strr-Strl, respectively. Then, differences dStf and dStr between the right and left stroke velocities for the wheels (front wheels in FIG.20), which correspond to variations in time of the differences Stf and Str between the right and left strokes, are calculated (M41). In case of providing the roll damping, it is effective with the road input being 1-3Hz, whereas the ride comfort may be deteriorated, with the road input of a frequency equal to or greater than that. Therefore, the differences dStf and dStr between the right and left stroke velocities are filtered by a low-pass filter (M42), a frequency band with components equal to or greater than 4-5 Hz will be cut off.

Furthermore, in order to improve the ride comfort by providing the roll damping force, the desired value of its control is calculated in accordance with the differences dStf and dStr between the right and left stroke velocities. That is, the desired value of roll damping force Rdf, Rdr for the front and rear wheels are calculated according to Rdf = Sgf · K9 · Sbsf · dStf, and Rdr = Sgr · K10 · Sbsr · dStr. Herein, K9 and K10 are coefficients for providing the applied amount of the roll damping force. Further, in such a case that the torsional rigidity of stabilizer bar is nonlinear, the desired values Rdf and Rdr can be determined on the basis of a map of the difference between right and left wheel stroke velocities and the roll damping force, which is experimentally obtained in advance.

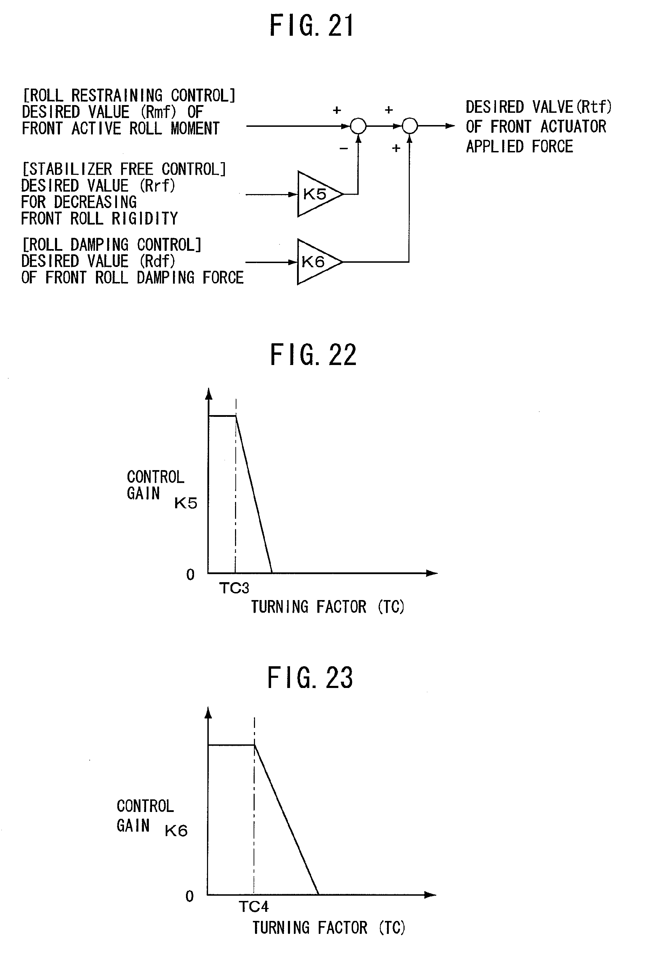

Therefore, as an embodiment of the desired value of stabilizer applied force calculation block M17 as shown in FIG.3, on the basis of the desired value Rmf of front active roll moment for the aforementioned roll restraining control provided in FIG.4, a desired value Rrf for decreasing front roll rigidity for the stabilizer free control provided in FIG.19, and a desired value Rdf of roll damping force provided in FIG.20, a final desired value Rtf of the force applied to the stabilizer actuator is provided, as shown in FIG.21. These values relate to controls for the front wheels, while controls for the rear wheels are similar to the controls for the front wheels, the latter of which will be mainly explained hereinafter.

In FIG.21, the desired value Rtf of the force applied to the front actuator is set as Rtf=Rmf-K5·Rrf+K6· Rdf. In this respect, K5 and K6 are control gains which provide contributory degrees of the stabilizer free control and the roll damping control to the overall control, and which are set as shown in FIGS.22 and 23. As described before, the roll restraining control is to restrain the rolling motion when the vehicle is turning, and the stabilizer free control and the roll damping control are to improve the ride comfort, mainly when the vehicle is traveling straight. Therefore, according to the roll restraining control, in the case where the level of turning state is small as shown in FIGS.6 and 7, the control gains K1 and K2 relative to the calculated lateral acceleration Gye are set to be larger than the control gains K3 and K4 relative to the actual lateral acceleration Gya, not to be influenced by the irregularity of road surface.

On the other hand, according to the stabilizer free control and roll damping control aimed to improve the ride comfort, as shown in FIGS.22 and 23, respectively, in the case where the level of turning state is small (the turning factor TC is smaller than TC3 and TC4, to be close to a straight traveling state), the control gains K5 and K6 are set to be large, so that the control gains are to be decreased as the turning state is increased. As for turning factors TC indicative of the turning states in FIGS.22 and 23, control gain maps can be provided for the actual lateral acceleration Gya, steering angle δf or yaw rate Yr, in addition to the calculated lateral acceleration Gye as described before. Also, it is possible to combine two or more out of the calculated lateral acceleration Gye, steering angle δf and yaw rate Yr.

According to the embodiment in FIG.21, a control for improving the ride comfort includes both of the stabilizer free control and the roll damping control, while it is possible to provide an embodiment including either one of them, and it is possible to combine existence or nonexistence of them at the front and rear wheels. As a result, embodiments having combinations as shown in the following Table 1 can be constituted. In Table 1, ○ indicates "equipped" (having the function at the uppermost end), × indicates "not equipped" (without the function at the uppermost end). Also, Nos.1-15 indicate embodiments to be combined by the elements with O.

[Table 1]

| No. | Stabilizer-free control | | Roll damping control | |
|---|---|---|---|---|
| | Front wheel | Rear wheel | Front wheel | Rear wheel |
| 1 | O | O | O | O |
| 2 | O | O | O | × |
| 3 | O | O | × | O |
| 4 | O | × | O | O |
| 5 | × | O | O | O |
| 6 | O | O | × | × |
| 7 | O | × | O | × |
| 8 | × | O | O | × |
| 9 | O | × | × | O |

(continued)

| No. | Stabilizer-free control | | Roll damping control | |
|---|---|---|---|---|
| | Front wheel | Rear wheel | Front wheel | Rear wheel |
| 10 | × | O | × | O |
| 11 | × | × | O | O |
| 12 | O | × | × | × |
| 13 | × | O | × | × |
| 14 | × | × | O | × |
| 15 | × | × | × | O |

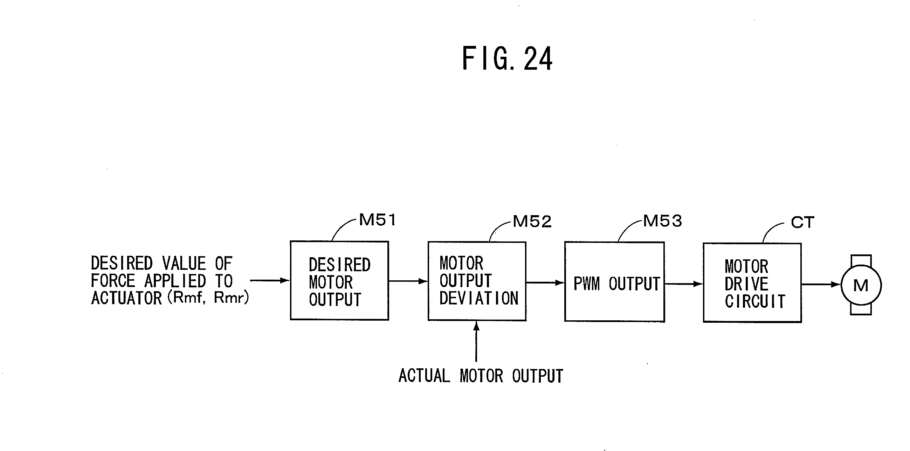

On the basis of the desired values Rtf and Rtr of the force applied to the front and rear stabilizer actuators provided as shown in FIG.21, the desired value of output from the electric motor M is calculated (M51), as shown in FIG.24. That is, comparing the desired value of motor output as calculated above with the actual motor output value, a deviation of motor output is calculated (M52). Furthermore, on the basis of this deviation, PMW output for the electric motor M is provided (M53). As the switching elements in the motor driving circuit CT is controlled by the PWM output, to drive the electric motor M.

As described above, according to the present invention, in the case where the vehicle is traveling straight, or the level of turning operation is small, the torsional rigidity of stabilizer is decreased so as to decrease the roll input to the vehicle body caused by the irregularity of road surface. That is, the roll moment resulted from the irregularity of road surface is decreased by applying the force to the stabilizer from outside. Also, it is possible to apply the damping force to the rolling motion, so that the ride comfort is improved. And, it is so constituted that when the turning state becomes large, the control gains for the stabilizer free control and the roll damping control are decreased to increase the control gains for the active roll restraining control, whereby the rolling motion can be restrained surely.

**Claims**

1.  A stabilizer control apparatus for controlling a torsional rigidity of a stabilizer disposed between a right wheel and a left wheel of a vehicle, to control a rolling motion of a vehicle body actively in response to a turning state of said vehicle, comprising:

     wheel stroke detection means for detecting a relative displacement between said vehicle body and said right and left wheels for at least one of a front axle and a rear axle of said vehicle;
     wheel stroke difference calculation means for calculating at least one of a difference between right and left wheel strokes and a difference between right and left wheel stroke velocities, on the basis of the result detected by said wheel stroke detection means;
     externally applied force setting means for setting an externally applied force for controlling the torsional rigidity of said stabilizer, on the basis of the result calculated by said wheel stroke difference calculation means, when said vehicle is traveling straight.

2.  A stabilizer control apparatus as set forth in claim 1, wherein said externally applied force setting means sets the externally applied force on the basis of a desired value for decreasing a roll rigidity, said desired value for decreasing the roll rigidity being determined on the basis of said difference between right and left wheel strokes.

3.  A stabilizer control apparatus as set forth in claim 1, wherein said externally applied force setting means sets the externally applied force, on the basis of a desired value of roll damping force, said desired value of roll damping force being determined on the basis of said difference between right and left wheel stroke velocities.

4.  A stabilizer control apparatus as set forth in claim 1, wherein said externally applied force setting means sets the externally applied force, on the basis of a desired value for decreasing a roll rigidity, said desired value for decreasing the roll rigidity being determined on the basis of said difference between right and left wheel strokes, and a desired value of roll damping force, said desired value of roll damping force being determined on the basis of said difference between right and left wheel stroke velocities.

5. A stabilizer control apparatus as set forth in claim 1, wherein said externally applied force setting means sets the externally applied force, on the basis of a desired value for decreasing a roll rigidity, said desired value for decreasing the roll rigidity being determined on the basis of said difference between right and left wheel strokes, a desired value of roll damping force, said desired value of roll damping force being determined on the basis of said difference between right and left wheel stroke velocities, and a desired value of active roll moment of said vehicle.

6. A stabilizer control apparatus as set forth in claim 5, wherein said externally applied force setting means sets the externally applied force, according to the following equation:

$$Rt=Rm-K5 \cdot Rr(St)+K6 \cdot Rd(dSt)$$

wherein,
Rt: externally applied force
Rm: desired value of active roll moment of a vehicle
Rr(St): desired value for decreasing roll rigidity determined on the basis of a difference between right and left wheel strokes
Rd(dSt): desired value of roll damping force determined on the basis of a difference between right and left wheel stroke velocities
K5,K6: control gain
St: difference between right and left wheel strokes
dSt: difference between right and left wheel stroke velocities

7. A stabilizer control apparatus for controlling a torsional rigidity of a stabilizer having a stabilizer bar disposed between a right wheel and a left wheel of a vehicle, to control a rolling motion of a vehicle body actively in response to a turning state of said vehicle, comprising:

wheel stroke detection means for detecting a relative displacement between said vehicle body and said right and left wheels for at least one of a front axle and a rear axle of said vehicle;
wheel stroke lateral difference calculation means for calculating a difference between right and left wheel strokes on the basis of the result detected by said wheel stroke detection means;
externally applied force setting means for setting an externally applied force for controlling the torsional rigidity of said stabilizer, on the basis of the result calculated by said wheel stroke lateral difference calculation means; and
turning factor setting means for setting a turning factor indicative of the turning state of said vehicle, said torsional rigidity of said stabilizer bar being decreased to be lower than a value inherently provided for said stabilizer bar, according to the externally applied force set by said externally applied force setting means, in response to the turning factor set by said turning factor setting means.

FIG. 1

# FIG. 2

CONTROL
SIGNAL

SR    RO    FT

HLfl

HLfr

SBfl

SBfr

RS    M    RD    SBf

FIG. 3

FIG. 4

EP 1 719 643 A1

# FIG. 5

| CALCULATED LATERAL ACCELERATION (Gye) | Gye → K1 |
| VARIATION OF CALCULATED LATERAL ACCELERATION (dGye) | dGye → K2 |
| FILTERED ACTUAL LATERAL ACCELERATION (Gya) | Gya → K3 |
| VARIATION OF ACTUAL LATERAL ACCELERATION (dGya) | dGya → K4 |

+ + + + → DESIRED VALUE (Rmv) OF VEHICLE ACTIVE ROLL MOMENT

TURNING FACTOR

# FIG. 6

K1(Gye GAIN)

CONTROL GAIN K1, K3

K3(Gya GAIN)

0

TC1

TURNING FACTOR(TC)

FIG. 7

K2(dGye GAIN)

K4(dGya GAIN)

CONTROL
GAIN
K2, K4

0    TC2    TURNING FACTOR (TC)

FIG. 8

K1 (Gye GAIN)

K3 (Gya GAIN)

CONTROL
GAIN
K1, K3

0    TURNING FACTOR (TC)

FIG. 9

K2 (dGye GAIN)

K4 (dGya GAIN)

CONTROL
GAIN
K2, K4

0    TURNING FACTOR (TC)

# FIG. 10

```
┌─────────────────────────┐
│ SPINNING VARIABLE ·      │
│ DRIFT-OUT VARIABLE       │
└─────────────────────────┘

┌─────────────────────────┐
│ COEFFICIENT OF           │
│ FRICTION                 │
└─────────────────────────┘

┌─────────────────────────┐         Gye    ┌────┐
│ CALCULATED LATERAL       │───────────────▷│ K1 │
│ ACCELERATION (Gye)       │                └────┘
└─────────────────────────┘

┌─────────────────────────┐        dGye    ┌────┐
│ VARIATION OF             │───────────────▷│ K2 │
│ CALCULATED LATERAL       │                └────┘
│ ACCELERATION (dGye)      │
└─────────────────────────┘

┌─────────────────────────┐         Gya    ┌────┐
│ FILTERED                 │───────────────▷│ K3 │
│ ACTUAL LATERAL           │                └────┘
│ ACCELERATION (Gya)       │
└─────────────────────────┘

┌─────────────────────────┐        dGya    ┌────┐
│ VARIATION OF             │───────────────▷│ K4 │
│ ACTUAL LATERAL           │                └────┘
│ ACCELERATION (dGya)      │
└─────────────────────────┘

┌─────────────────────────┐
│ DETERMINATION            │
│ OF ROUGH ROAD            │
└─────────────────────────┘

┌─────────────────────────┐
│ TURNING FACTOR           │
└─────────────────────────┘
```

DESIRED VALUE (Rmv) OF VEHICLE ACTIVE ROLL MOMENT

# FIG. 11

CONTROL GAIN K1, K3

K1 (ROUGH ROAD)

K3 (NORMAL)

K3 (ROUGH ROAD)

K1 (NORMAL)

0    TC3    TC4    TURNING FACTOR (TC)

# FIG. 12

- K2 (ROUGH ROAD)
- K4 (NORMAL)
- K4 (ROUGH ROAD)
- K2 (NORMAL)

CONTROL GAIN K2, K4

0

TC5  TC6

TURNING FACTOR (TC)

# FIG. 13

$Gye_{max}1$

UPPER LIMIT OF CALCULATED LATERAL ACCELERATION ($Gye_{max}$)

$\mu_{max}1$

COEFFICIENT OF FRICTION ($\mu_{max}$)

$Gye_{max}1$

CALCULATED LATERAL ACCELERATION TO BE MODIFIED ($Gye_{max}$)

CALCULATED LATERAL ACCELERATION

# FIG. 14

CONTROL GAIN K1, K3

COEFFICIENT OF FRICTION($\mu_{max}$)

# FIG. 15

CONTROL GAIN K2, K4

COEFFICIENT OF FRICTION($\mu_{max}$)

# FIG. 16

CONTROL GAIN K1, K3

SPINNING STATE VARIABLE / DRIFT-OUT STATE VARIABLE

# FIG. 17

CONTROL
GAIN
K2, K4

K2

K4

SPINNING STATE VARIABLE /
DRIFT-OUT STATE VARIABLE

# FIG. 18

INITIAL VALUE (Rsrfo)
OF FRONT ROLL
RIGIDITY RATIO

VEHICLE SPEED (Vx)

# FIG. 19

RIGHT FRONT STROKE → Stfr
LEFT FRONT STROKE → Stfl

M31
CALCULATE:
DIFFERENCE BETWEEN
RIGHT AND LEFT STROKES
FOR FRONT WHEELS

→

M32
FREQUENCY
FILTER

→

M33
DECREASE:
STABILIZER
TORSIONAL FORCE

→

DESIRED VALUE (Rrf)
FOR DECREASING
FRONT ROLL RIGIDITY

EP 1 719 643 A1

EP 1 719 643 A1

# FIG. 20

RIGHT FRONT STROKE
Stfr →

LEFT FRONT STROKE →
Stfl

| M41 | M42 | M43 |
|---|---|---|
| CALCULATE: DIFFERENCE BETWEEN RIGHT AND LEFT STROKE VELOCITIES FOR FRONT WHEELS | FREQUENCY FILTER | CALCULATE: STABILIZER ROLL DAMPING FORCE |

→ DESIRED VALUE (Rdf)
OF FRONT ROLL
DAMPING FORCE

# FIG. 21

[ROLL RESTRAINING CONTROL]
DESIRED VALUE (Rmf) OF
FRONT ACTIVE ROLL MOMENT

[STABILIZER FREE CONTROL]
DESIRED VALUE (Rrf)
FOR DECREASING
FRONT ROLL RIGIDITY

[ROLL DAMPING CONTROL]
DESIRED VALUE (Rdf)
OF FRONT ROLL DAMPING FORCE

DESIRED VALVE (Rtf)
OF FRONT ACTUATOR
APPLIED FORCE

# FIG. 22

CONTROL
GAIN  K5

0

TC3

TURNING FACTOR (TC)

# FIG. 23

CONTROL
GAIN  K6

0

TC4

TURNING FACTOR (TC)

# FIG. 24

EP 1 719 643 A1

```
DESIRED VALUE OF
FORCE APPLIED TO        →   ┌──────────┐ M51  ┌──────────┐ M52  ┌──────────┐ M53  ┌──────────┐ CT       ┌───┐
ACTUATOR (Rmf, Rmr)         │ DESIRED  │  →   │  MOTOR   │  →   │   PWM    │  →   │  MOTOR   │    →     │ M │
                            │  MOTOR   │      │  OUTPUT  │      │  OUTPUT  │      │  DRIVE   │          └───┘
                            │  OUTPUT  │      │DEVIATION │      │          │      │ CIRCUIT  │
                            └──────────┘      └──────────┘      └──────────┘      └──────────┘
                                                   ↑
                                        ACTUAL MOTOR OUTPUT
```

# EP 1 719 643 A1

| | INTERNATIONAL SEARCH REPORT | International application No. |
|---|---|---|
| | | PCT/JP2005/002925 |

**A. CLASSIFICATION OF SUBJECT MATTER**
Int.Cl⁷ B60G17/015, B60G21/055

According to International Patent Classification (IPC) or to both national classification and IPC

**B. FIELDS SEARCHED**

Minimum documentation searched (classification system followed by classification symbols)
Int.Cl⁷ B60G1/00-B60G25/00

Documentation searched other than minimum documentation to the extent that such documents are included in the fields searched
Jitsuyo Shinan Koho        1926-1996   Toroku Jitsuyo Shinan Koho   1994-2005
Kokai Jitsuyo Shinan Koho   1971-2005   Jitsuyo Shinan Toroku Koho   1996-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 08-132844 A  (Toyota Motor Corp.), 28 May, 1996 (28.05.96), Full text (Family: none) | 1-7 |
| Y | JP 60-064016 A  (Nissan Motor Co., Ltd.), 12 April, 1985 (12.04.85), Full text (Family: none) | 1-7 |
| A | JP 60-191802 A  (Nissan Motor Co., Ltd.), 30 September, 1985 (30.09.85), Page 5, upper left column to page 7, lower right column, line 13; Fig. 8 (Family: none) | 1-7 |

[X] Further documents are listed in the continuation of Box C.      [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 March, 2005 (31.03.05) | 19 April, 2005 (19.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 719 643 A1**

<table>
<tr><th colspan="2">INTERNATIONAL SEARCH REPORT</th><th>International application No.</th></tr>
<tr><td colspan="2"></td><td>PCT/JP2005/002925</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 60-157911 A  (Nissan Motor Co., Ltd.), 27 January, 1985 (27.01.85), Page 4, upper right column to page 6, upper right column, line 17; Fig. 6 (Family: none) | 1-7 |
| A | JP 2001-047839 A  (Toyota Motor Corp.), 20 February, 2001 (20.02.01), Fig. 2 (Family: none) | 1,2,4-7 |
| A | JP 03-231018 A  (Mazda Motor Corp.), 15 October, 1991 (15.10.91), Page 5, upper left column, line 7 to page 6, left column, line 17; Fig. 5 (Family: none) | 1,3-6 |
| A | Microfilm of the specification and drawings annexed to the request of Japanese Utility Model Application No. 006089/1990(Laid-open No. 098105/1991) (Toyota Motor Corp.), 11 October, 1991 (11.10.91), Page 9, lines 5 to 14; page 10, line 10 to page 12, line 1 (Family: none) | 1-7 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8268027 A
- JP 2002518245 W
- JP 9020223 A
- JP 2001063544 A
- JP 9193776 A